# EUROPEAN PATENT APPLICATION

(11) **EP 4 201 795 A1**
(43) Date of publication of application: **28.06.2023**
(21) Application number: 22215390.0
(22) Date of filing: 21.12.2022
(51) Int. Cl.: B62J 23/00

(54) **SADDLE-RIDE VEHICLE**

(30) Priority: 21.12.2021 JP 2021207269
(71) Applicant: HONDA MOTOR CO., LTD., Minato-ku Tokyo 107-8556 (JP)
(72) Inventor: MINE, Keigo, Tokyo, 107-8556 (JP); NAGASHIMA, Yusuke, Tokyo, 110-0005 (JP)
(74) Representative: Dehns

(57) **Abstract**

Storage efficiency is improved without impairing running performance. A vehicle body frame (11) of a saddle-ride vehicle includes: a down frame (33) extending downward from a head pipe (18) toward a front side of a power unit (12); and a lower frame (34) located on a lower side of the power unit (12). A skid plate (81) extends from a lower part of the down frame (33) to a front part of the lower frame (34), has an upper plate (92) and a lower plate (91), and has a storage portion (92L) between the upper plate (92) and the lower plate (91) .

## Description

### BACKGROUND OF THE INVENTION

### Field of the Invention

The present invention relates to a saddle-ride vehicle.

### Description of the Related Art

There is a saddle-ride vehicle having a skid plate that covers at least a part of a power unit (for example, Japanese Patent Laid-Open No. 2016-068838).

It is desirable to increase a storage space of this type of saddle-ride vehicle.

However, it is not preferable that a stored article adversely affect a position of the center of gravity of the saddle-ride vehicle and hinder running performance.

The present invention has been made in view of the circumstances described above, and an object of the present invention is to improve storage efficiency without impairing running performance.

### SUMMARY OF THE INVENTION

In a saddle-ride vehicle including: a vehicle body frame; and a skid plate covering at least a part of a power unit, the vehicle body frame includes a down frame extending downward from a head pipe toward a front side of the power unit and includes a lower frame located on a lower side of the power unit, and the skid plate extends from a lower part of the down frame to a front part of the lower frame, includes an upper plate and a lower plate, and includes a storage portion between the upper plate and the lower plate.

It is possible to improve storage efficiency without impairing running performance.

### BRIEF DESCRIPTION OF THE DRAWINGS

FIG. 1 is a side view of a saddle-ride vehicle according to an embodiment of the present invention;
FIG. 2 is a perspective view showing the saddle-ride vehicle from a front left side;
FIG. 3 is a view showing a skid plate together with a vehicle body frame from a lateral side;
FIG. 4 is a view showing the skid plate together with the vehicle body frame from a front side;
FIG. 5 is a perspective view showing the skid plate together with the vehicle body frame from a rear left side;
FIG. 6 is a perspective view showing the skid plate from a rear left side;
FIG. 7 is a perspective view showing the skid plate from a front left side;
FIG. 8 is an exploded perspective view of the skid plate;
FIG. 9 is a cross-sectional view taken along a line IX-IX in Fig. 3;
FIG. 10 is a cross-sectional view taken along a line X-X of Fig. 3;
FIG. 11 is an exploded perspective view of a skid plate according to a modification; and
FIG. 12 is a view showing an example of a cross section in a vehicle width direction when a left projecting portion and a central projecting portion are configured as storage portions.

### BRIEF DESCRIPTION OF THE PREFERRED EMBODIMENTS

An embodiment of the present invention will be described below with reference to the drawings. Unless otherwise mentioned, directions including front-rear, left-right, and up-down mentioned in the description are the same as those directions relative to a vehicle body. Reference signs FR, UP, and LH shown in the drawings indicate a vehicle body front side, a vehicle body upper side, and a vehicle body left side, respectively.

### [Embodiment]

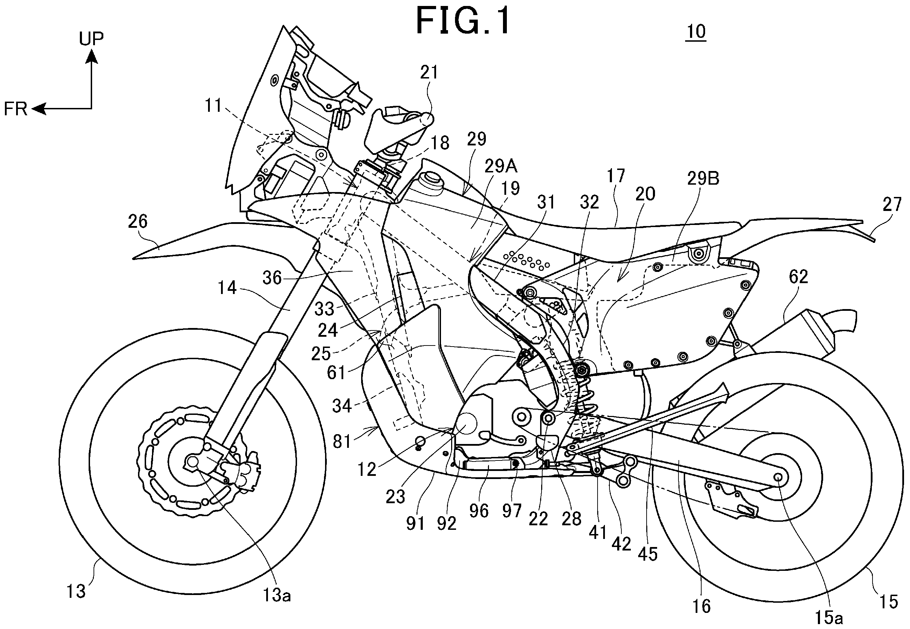

Fig. 1 is a side view of a saddle-ride vehicle 10 according to an embodiment of the present invention.

The saddle-ride vehicle 10 is a vehicle including a vehicle body frame 11, a power unit 12 supported on the vehicle body frame 11, a front fork 14 that supports a front wheel 13 in a steerable manner, a swing arm 16 that supports a rear wheel 15, and a seat 17 for a rider.

The saddle-ride vehicle 10 is a vehicle on which the rider sits astride the seat 17. The seat 17 is provided above a rear part of the vehicle body frame 11.

The vehicle body frame 11 includes a head pipe 18 provided at a front end portion of the vehicle body frame 11, a front frame 19 located on a rear side of the head pipe 18, and a rear frame 20 located on a rear side of the front frame 19. A front end portion of the front frame 19 is connected to the head pipe 18.

The seat 17 is supported on the rear frame 20.

The front fork 14 is supported on the head pipe 18 in such a manner that it can be steered left and right. The front wheel 13 is supported on an axle 13a provided at a lower end portion of the front fork 14. A handle 21 for steering that the rider grasps is mounted at an upper end portion of the front fork 14.

The swing arm 16 is supported on a pivot shaft 22 that is supported on the vehicle body frame 11. The pivot shaft 22 is a shaft extending horizontally in a vehicle width direction. The pivot shaft 22 is passed through a front end portion of the swing arm 16. The swing arm 16 swings up and down around the pivot shaft 22.

The rear wheel 15 is supported on an axle 15a provided at a rear end portion of the swing arm 16.

The power unit 12 is disposed between the front wheel 13 and the rear wheel 15 and supported on the vehicle body frame 11.

The power unit 12 is an internal combustion engine. The power unit 12 includes a crankcase 23 and a cylinder 24 that houses a reciprocating piston. An exhaust device 25 is connected to an exhaust port of the cylinder 24.

An output of the power unit 12 is transmitted to the rear wheel 15 through a drive power transmission member that connects the power unit 12 and the rear wheel 15 to each other.

The saddle-ride vehicle 10 further includes a front fender 26 that covers the front wheel 13 from above, a rear fender 27 that covers the rear wheel 15 from above, footrests 28 on which the rider places his or her feet, and a fuel tank 29 that stores fuel to be used by the power unit 12.

The front fender 26 is mounted on the front fork 14. The rear fender 27 and the footrests 28 are provided on a lower side relative to the seat 17. The fuel tank 29 is supported on the vehicle body frame 11.

A saddle-ride vehicle 10 is a saddle-ride vehicle for rally competition, and includes left and right front fuel tanks 29A and a rear fuel tank 29B as fuel tanks 29. The front fuel tanks 29A are disposed on the left and right sides of the front frame 19, and the rear fuel tank 29B is disposed inside the rear frame 20. The saddle-ride vehicle 10 includes a side stand 45 for supporting the vehicle body in an inclined state in which the side stand 45 is inclined to one of the left and right sides when parked.

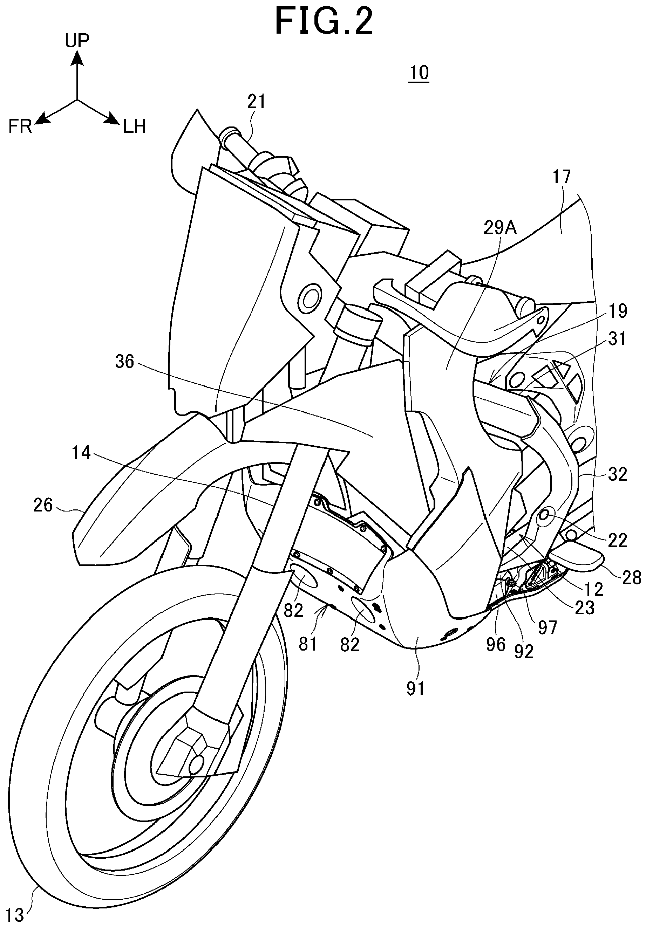

FIG. 2 is a perspective view showing the saddle-ride vehicle 10 from the front left side.

As shown in FIGS. 1 and 2, the saddle-ride vehicle 10 includes a skid plate 81 covering at least a part of a power unit 12. The skid plate 81 is provided on the rear side of the front wheel 13 and on the front side of the power unit 12. The skid plate 81 prevents water, soil, mud, and other flying debris from the front side from adhering to the part of the power unit 12, and a front side obstacle or the like from contacting the part of the power unit 12. The skid plate 81 can also prevent flying debris from the front side from adhering to the front fuel tanks 29A or the like.

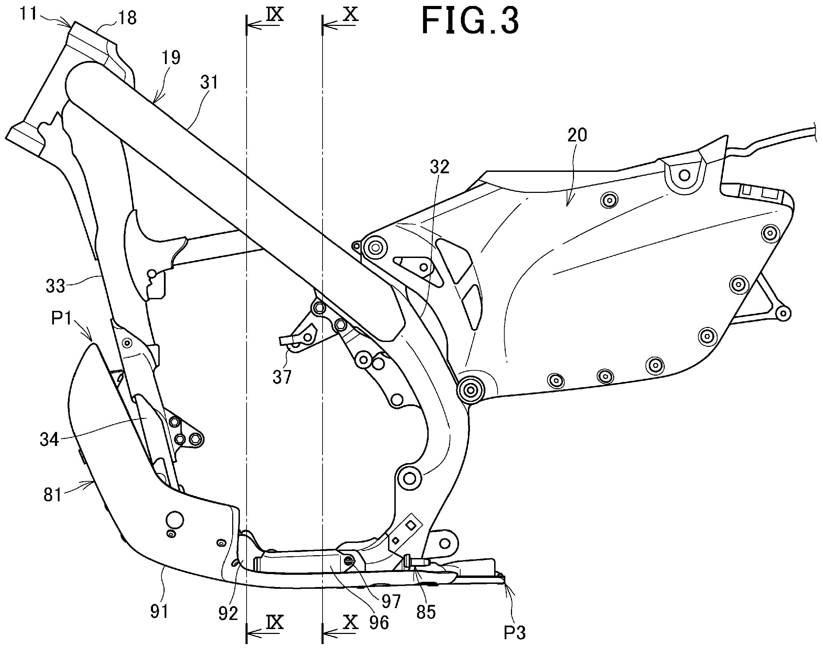

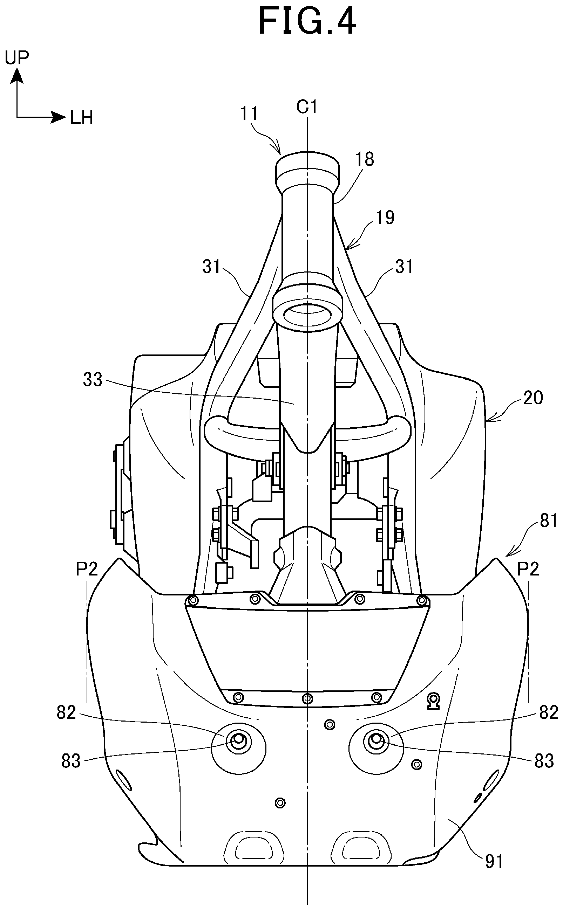

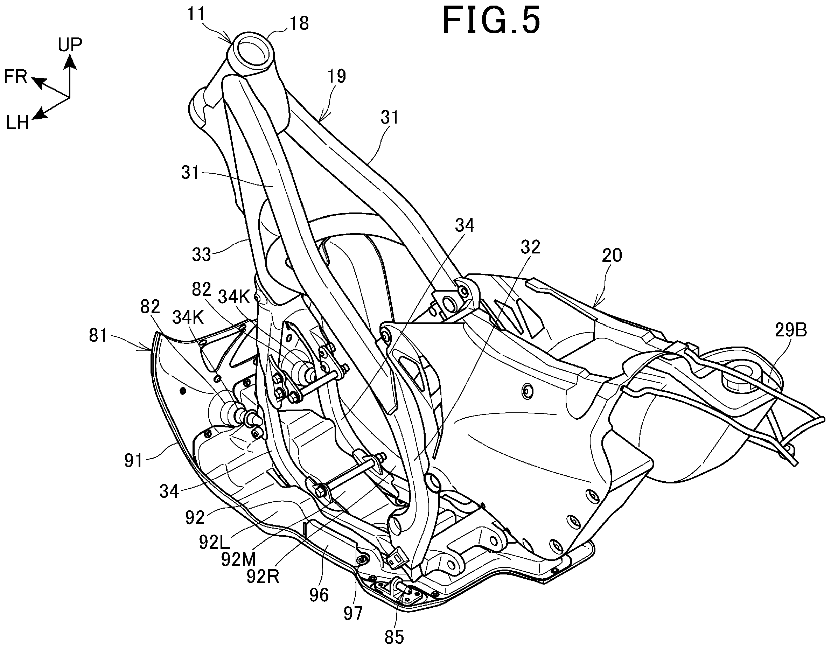

FIG. 3 is a view showing the skid plate 81 together with the vehicle body frame 11 from a lateral side. FIG. 4 is a view showing the skid plate 81 together with the vehicle body frame 11 from the front side, and FIG. 5 is a perspective view of the skid plate 81 together with the vehicle body frame 11 from the rear left side. In FIG. 4, a reference numeral and character C1 indicates a width center of the saddle-ride vehicle 10.

As shown in FIGS. 3 to 5, the front frame 19 includes: a pair of left and right main frames 31 extending rearward and downward from the head pipe 18; a pair of left and right pivot frames 32 extending downward from a rear end portion of the main frames 31; a down frame 33 extending downward from the head pipe 18; and a pair of left and right lower frames 34 that extend rearward from a lower end portion of the down frame 33 and that are connected to a lower end portion of the pivot frame 32.

The down frame 33 is a single frame extending in the up-down direction in a front view. A pair of left and right radiator grilles 36 are disposed on both sides of the down frame 33, and a radiator is supported inside the pair of left and right radiator grilles 36.

The pair of left and right lower frames 34 extend downward in left and right from a lower end portion of the down frame 33 and then extend rearward. A pivot frame 32 supports the pivot shaft 22. The rear frame 20 is connected to the main frames 31 and the pivot frames 32.

As shown in FIG. 1, the power unit 12 is an internal combustion engine (engine) that includes a crankcase 23 that supports a crankshaft extending in the vehicle width direction, and a cylinder portion 24 that extends upward from a front portion of the crankcase 23. The power unit 12 is supported in a space surrounded by the main frames 31, the pivot frames 32, and the down frame 33 in a side view of the vehicle body.

An exhaust pipe 61 is connected to a front surface of the cylinder portion 24. The exhaust pipe 61 is disposed at a position offset to one of the left and right sides (right side in the present embodiment). The exhaust pipe 61 extends downward through the right side of the down frame 33, bends rearward at the lower front side of the crankcase 23, and extends rearward through the lower side of the crankcase 23.

An exhaust muffler 62 is connected to the downstream end corresponding to the rear end of the exhaust pipe 61. The exhaust muffler 62 is supported on one of the left and right sides (right side) of the rear wheel 15, reduces the pressure of the exhaust gas from the exhaust pipe 61, and discharges it to the outside. An exhaust device 25 is configured with the exhaust pipe 61 and the exhaust muffler 62. A catalyst for purifying the exhaust gas is appropriately provided in the exhaust path of the exhaust device 25.

A rear cushion 41 is disposed on the rear side of the power unit 12 and between the left and right pivot frames 32. The upper end of the rear cushion 41 is connected to a cushion connecting portion 37 (FIG. 3) provided on the vehicle body frame 11, and the lower end of the rear cushion 41 is connected to the swing arm 16 via a link 42 (FIG. 1).

As shown in FIGS. 3 to 5, the skid plate 81 extends rearward from a lower part of the down frame 33 on the lower side of the lower frames 34, and is formed in a shape that protrudes left and right in a front view of the vehicle body.

The skid plate 81 is formed as a large cover covering the front surface of the crankcase 23 from the front side. In other words, the front upper end P1 (FIG. 3) of the skid plate 81 is located on the upper side relative to the upper end of the crankcase 23. Further, the left and right ends P2 (FIG. 4) of the skid plate 81 is located at the same position as the left and right ends of the power unit 12 or on the left and right outer sides. In addition, the rear end P3 (FIG. 3) of the skid plate 81 is located on the rear side relative to the power unit 12 and the lower frames 34.

Since this skid plate 81 extends across the lower frames 34 in the front-rear direction, the skid plate 81 can cover the crankcase 23 across the front and rear from the lower side. This makes it possible to sufficiently protect the crankcase 23 and the like from pebbles and the like flipped up by the front wheel 13 on rough roads, unpaved roads, etc., and obstacles such as steps ahead. Note that the skid plate 81 can also be called an engine guard and a mudguard.

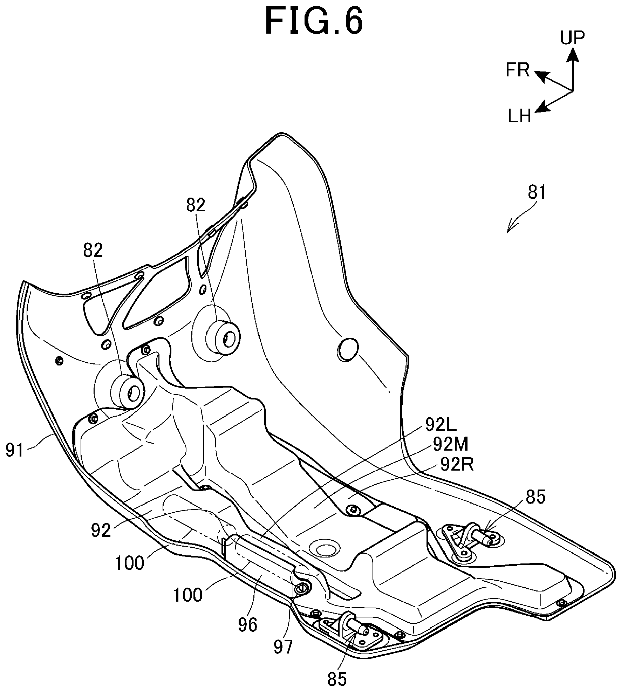

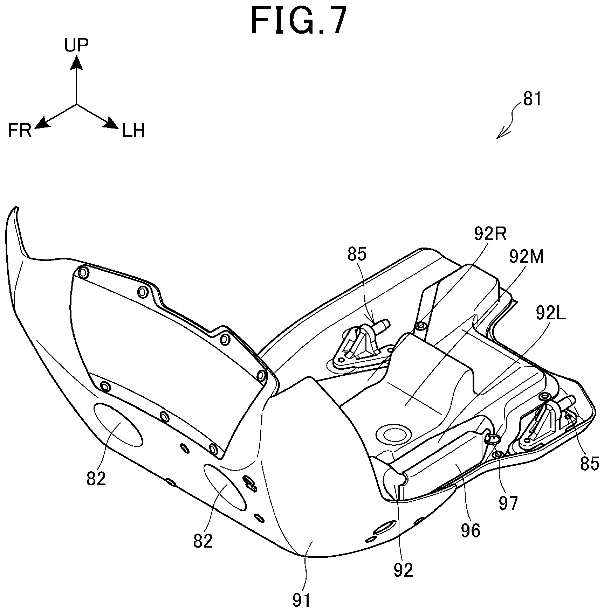

FIGS. 6 and 7 are views showing the skid plate 81 from different directions.

A pair of left and right mounted portions 82 that are to be mounted on the pair of left and right lower frames 34 are provided on a front part of the skid plate 81. These mounted portions 82 are formed in a shape denting rearward and have holes penetrating in the front-rear direction.

As shown in FIG. 6, these mounted portions 82 overlap fixing portions 34K, which are provided on the pair of left and right lower frames 34, from the front side of the vehicle body. Then, predetermined mounting members 83 (FIG. 4) are attached to the fixing portions 34K from the front side of the mounted portions 82, and thereby the front part of the skid plate 81 is fixed to the left and right lower frames 34. The mounting members 83 are not particularly limited, but may be, for example, bolts, nuts, clip nuts, quick fasteners, or the like.

Since each of the mounted portions 82 is formed in a shape denting rearward, when the mounting member 83 is attached, the mounting member 83 is fitted in the mounted portion 82, and the mounting member 83 does not protrude forward from the skid plate 81. Further, when performing the attachment and detachment work of the skid plate 81, the operator can visually recognize positions of the mounted portions 82 more easily, which facilitates the attachment and detachment work.

A pair of left and right attachment and detachment portions 85 to be hooked on a part of the saddle-ride vehicle 10 are provided at a rear part of the skid plate 81. These attachment and detachment portions 85 have shaft members projecting rearward, and the saddle-ride vehicle 10 is provided with portions into which these shaft members can be inserted. The pair of left and right shaft members are inserted into the portion on the vehicle body side, so that the up-down and left-right positions of the respective shaft members are determined. In this state, the front part of the skid plate 81 is fixed to the respective lower frames 34 with the mounting members 83, and thereby a skid plate 81 is fixed to the saddle-ride vehicle 10.

This mounting structure of the skid plate 81 makes it possible to remove the skid plate 81 just by removing the mounting member 83 from the front part of the skid plate 81 and shifting the skid plate 81 forward. Further, the rear part of the skid plate 81 can be hooked to the saddle-ride vehicle 10 when the skid plate 81 is attached, so that the attachment work of the mounting member 83 is easy. Therefore, the attachment and detachment work of the skid plate 81 is easy.

Although the case in which the attachment and detachment portions 85 are inserted and hooked to a part of the saddle-ride vehicle 10 is shown as an example, the attachment and detachment portions 85 may be hooked to a part of the saddle-ride vehicle 10 using an engaging structure other than insertion. Further, an impact relieving member such as a rubber member may be inserted between the skid plate 81 and the saddle-ride vehicle 10, to relieve impact force acting on the saddle-ride vehicle 10 from the skid plate 81.

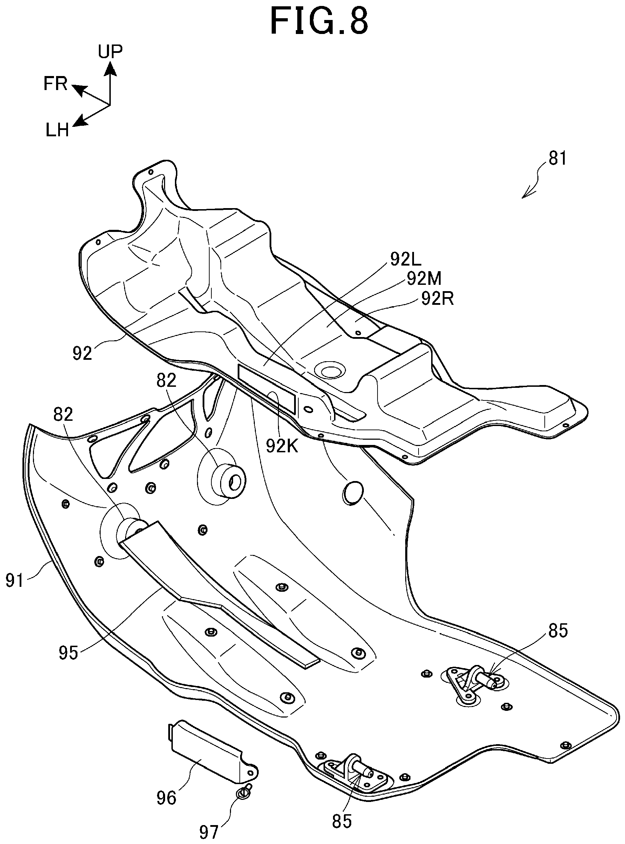

FIG. 8 is an exploded perspective view of the skid plate 81.

The skid plate 81 includes a main plate 91 made of carbon material and a sub-plate 92 superimposed on the main plate 91 from the upper side.

The main plate 91 extends from a lower part of the down frame 33 to the rear lower side of the lower frames 34 and is formed in a plate shape projecting left and right from the vehicle width center C1 in a front view of the vehicle body, to cover the front side and lower side of the crankcase 23. On the front part of the main plate 91, mounted portions 82 are provided left and right apart from each other, and, on the rear part of the main plate 91, the attachment and detachment portions 85 are provided left and right apart from each other.

The material of this main plate 91 may be a resin material, or a metal material instead of a carbon material.

The sub-plate 92 is formed smaller than the main plate 91, and is fixed with a mounting member such as bolts in a region between the left and right mounted portions 82, and the attachment and detachment portions 85 in the main plate 91.

The sub-plate 92 is formed in a projecting shape that projects upward from the main plate 91, and defines an empty space with the main plate 91. When this sub-plate 92 is mounted on the saddle-ride vehicle 10 (see FIG. 5), the sub-plate 92 is formed in a shape integrally including: a left projecting portion 92L located on the left side with respect to the left lower frame 34; a central projecting portion 92M located between the left and right lower frames 34; and a right projecting portion 92R located on the right side with respect to the right lower frame 34.

The material of the sub-plate 92 may be a carbon material, a resin material, or a metal material.

The projecting portions 92L, 92M and 92R each have a projecting shape that fills a gap between the main plate 91 and the crankcase 23, and extend in the front-rear direction between the mounted portions 82 and the attachment and detachment portions 85 in a side view of the vehicle body. As a result, an internal space that extends across the sub-plate 92 in the front-rear direction is formed inside each of the projecting portions 92L, 92M, and 92R.

The left projecting portion 92L and the right projecting portion 92R protrude outward in the vehicle width direction from the left and right lower frames 34, and can therefore function as a protective member that protects the respective lower frames 34 from flying debris from the lateral sides of the vehicle body.

As shown in FIG. 8, a sheet-like cushioning member 95 is disposed in a region of the main plate 91 covered by the left projecting portion 92L. The cushioning member 95 is a member that is disposed substantially entirely in the region covered by the left projecting portion 92L and that relieves impact force acting between the main plate 91 and an article 100 described later in the left projecting portion 92L. For example, the cushioning member 95 applied may be a member made of an elastic material such as rubber or any cushioning material such as sponge, and does not need to have a seat shape.

The left projecting portion 92L is provided with an opening 92K that opens to the vehicle body lateral side (left side), and the opening 92K is covered with a lid member 96. The lid member 96 is fixed to the left projecting portion 92L with a fixing member 97. The fixing member 97 can be easily removed by a rider or the like, so that the lid member 96 can be easily removed to expose the opening 92K to the outside.

Thus, since the opening 92K is covered with the lid member 96 that is easily detachable, it is possible to put any article 100 into and take it out of the left projecting portion 92L through the opening 92K, and the left projecting portion 92L can be used as a storage portion for storing any article 100. The article 100 to be stored in the left projecting portion 92L is not particularly limited, but is, for example, an in-vehicle tool or an airbag cylinder.

The airbag cylinder is an article that may be loaded as a spare when the rider wears an airbag jacket. FIG. 6 shows a state in which an airbag cylinder (hereinafter denoted by reference numeral 100) is stored.

As shown in FIG. 6, an internal space that is long in the front-rear direction is formed in the left projecting portion 92L, so that two airbag cylinders 100 can be stored side by side in the front-rear direction.

The opening 92K and the lid member 96 are provided at positions exposed to a lateral side of the vehicle body in a side view of the vehicle body. More specifically, as shown in FIG. 1, the opening 92K and the lid member 96 are located on the lower side of the crankcase 23 near a rear part and on the lower front side of the footrest 28 in a side view of the vehicle body. This makes it possible to easily put in and take out a load such as an airbag cylinder 100 with the skid plate 81 being mounted on the saddle-ride vehicle 10.

In this configuration, the opening 92K is formed in a rectangular shape that is long in the front-rear direction in a side view of the vehicle body, and has a shape that allows the airbag cylinder 100, the in-vehicle tool, etc. to be put in and taken out freely. However, the shape, position, etc. of the opening 92K may be changed as appropriate.

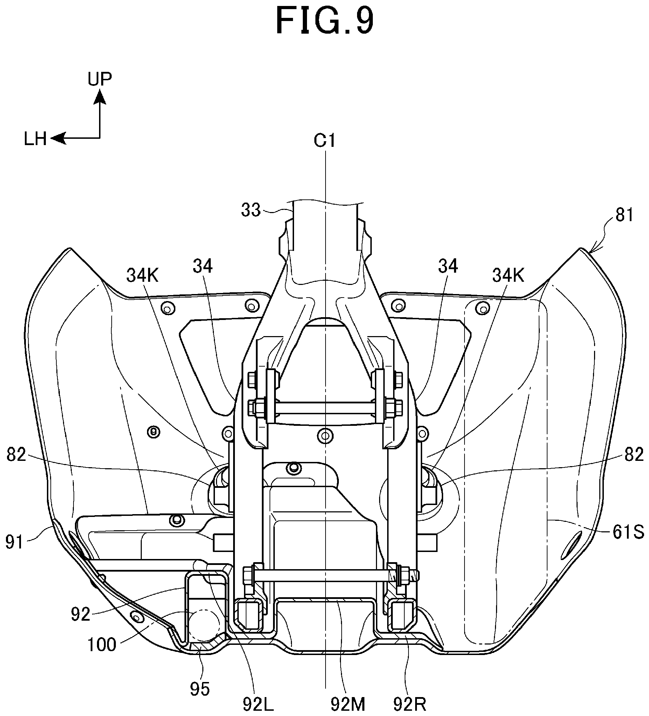

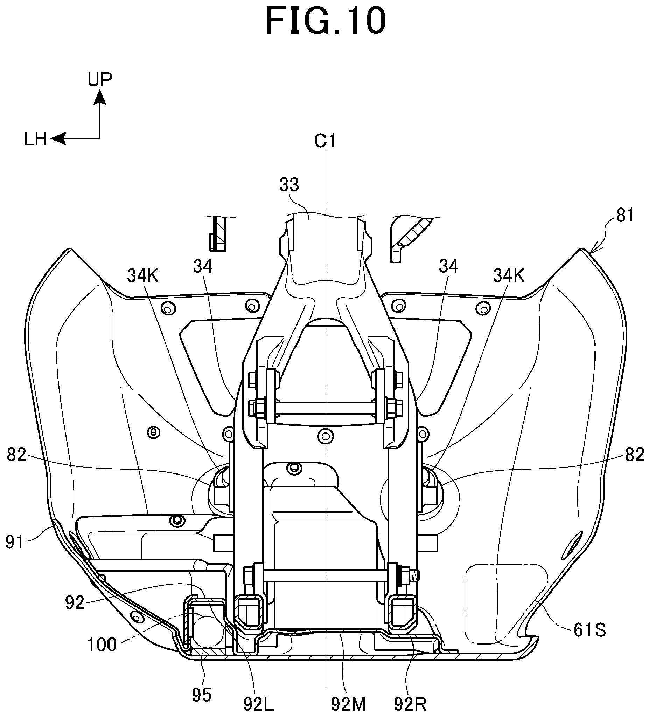

FIG. 9 shows an IX-IX cross-sectional view of FIG. 3, and FIG. 10 shows an X-X cross-sectional view of FIG. 3. FIGS. 9 and 10 schematically show a state in which an airbag cylinder 100 is stored in the left projecting portion 92L.

As shown in FIGS. 9 and 10, the left projecting portion 92L projects upward along an outer surface, in the vehicle width direction, of the left lower frame 34, and has an internal space in rectangular shape in cross-sectional views (corresponding to a cross-sectional views in the vehicle width direction) shown in FIGS. 9 and 10. Since the left projecting portion 92L has the internal space in rectangular shape, the left projecting portion 92L facilitates storing an article such as an airbag cylinder 100 or an in-vehicle tools. As shown in FIGS. 9 and 10, the cushioning member 95 is disposed at a bottom part of the internal space of the left projecting portion 92L, so that impact force, which acts on an article such as an airbag cylinder 100 in the left projecting portion 92L, from the main plate 91 is relieved by the cushioning member 95.

Note that the central projecting portion 92M is an internal space having a rectangular shape that projects upward in the cross-sectional view shown in FIGS. 9 and 10, and has an internal space longer in the left-right direction than the left projecting portion 92L.

As shown in FIG. 10, the right projecting portion 92R is formed smaller than the left projecting portion 92L. An exhaust pipe 61 is disposed outside (corresponding to the right side) the right lower frame 34 in the vehicle width direction. In FIGS. 9 and 10, a space 61S, in which the exhaust pipe 61 is disposed (hereinafter referred to as an exhaust pipe space 61S), is schematically shown in a dashed and double-dotted line.

Note that the exhaust pipe space 61S in FIGS. 9 and 10 indicates a rough bound of the space that can be allocated to the exhaust pipe 61 in the internal space of the skid plate 81, and does not indicate the outer shape of the exhaust pipe 61.

The right projecting portion 92R is formed smaller than the left projecting portion 92L, and less protrudes outward from the lower frame 34 in the vehicle width direction than the left projecting portion 92L. This makes it possible to sufficiently provide an exhaust pipe space 61S, and to sufficiently provide a separation distance between the exhaust pipe 61 and the right projecting portion 92R as well.

As described above, the skid plate 81 of the present embodiment: has a main plate 91 that extends from a lower part of the down frame 33 to a front part of the lower frames 34 and functions as a lower plate, and a sub-plate 92 that functions as an upper plate; and has a left projecting portion 92L that functions as a storage portion capable of storing an article 100 between the main plate 91 and the sub-plate 92. With this configuration, the storage space for the saddle-ride vehicle 10 can be increased. Moreover, since the left projecting portion 92L is located in a lower part of the vehicle body, a heavy article 100 can be stored in a lower part of the vehicle body, and the storage efficiency is improved without impairing running performance.

Further, the left projecting portion 92L has the opening 92K and the lid member 96 functioning as an opening-closing portion for putting an article 100 into and taking it out of the vehicle body lateral side. This makes it possible to put in and take out an article 100 without removing the skid plate 81 from the saddle-ride vehicle 10, and usability improves.

Further, since the left projecting portion 92L is located outside the lower frames 34 in the vehicle width direction, it is possible to protect the lower frames 34 from flying debris from the lateral sides of the vehicle body.

In addition, the main plate 91 is provided with a cushioning member 95 that relieves impact force acting between the main plate 91 and an article 100 in the left projecting portion 92L. This makes it possible to protect an article 100 and the main plate 91 portion in the left projecting portion 92L if they are affected by vibration or the like in running.

The front part of the skid plate 81 is provided with the mounted portions 82 to be mounted on the vehicle body frame 11 with a mounting member 83, and the rear part of the skid plate 81 is provided with the attachment and detachment portions 85 that can be hooked on a part of the saddle-ride vehicle 10. With this configuration, the skid plate 81 can be easily attached and detached, and maintenance around the power unit 12 is facilitated.

The above embodiment shows one aspect of the present invention, and the present invention is not limited to the above embodiment. For example, a portion of the skid plate 81 other than the left projecting portion 92L may be configured for another storage portion for storing any article 100.

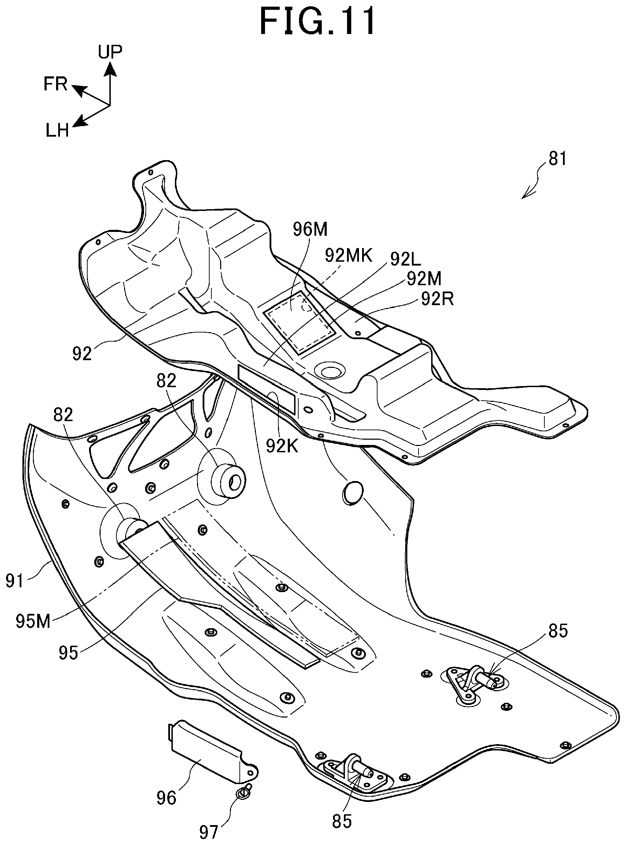

FIG. 11 is an exploded perspective view of a skid plate 81 according to a modification.

The central projecting portion 92M of the sub-plate 92 is provided with an opening 92MK opening upward, and the opening 92MK is covered with a lid member 96M. The lid member 96M is a member that opens and closes the opening 92MK, and is a member connected to the sub-plate 92 via, for example, a member to be attached and detached, or a hinge mechanism, slide mechanism, or the like. With this configuration, the central projecting portion 92M can be configured for the other storage portion.

This makes it possible to effectively use the space between the pair of left and right lower frames 34 as a storage portion and to protect an article 100 stored in the central projecting portion 92M and the central projecting portion 92M with the lower frames 34.

In this case, as shown in FIG. 11, it is preferable to dispose a sheet-like cushioning member 95M in the region of the main plate 91 covered by the central projecting portion 92M. The cushioning member 95M can protect an article 100 stored in the central projecting portion 92M and the main plate 91 portion in the central projecting portion 92M if they are affected by vibrations in running.

Note that the position and shape of the opening 92MK, the structure of the lid member 96M, and the like may be changed appropriately. These opening 92MK and the lid member 96M function as an opening-closing portion for putting an article 100 into and taking it out of the central projecting portion 92M.

FIG. 11 shows, as an example, the case where the cushioning members 95 and 95M are disposed on the main plate 91. However, another cushioning member may be further disposed on the sub-plate 92 to relieve impact force acting between the sub-plate 92 and an article 100 in the storage portion.

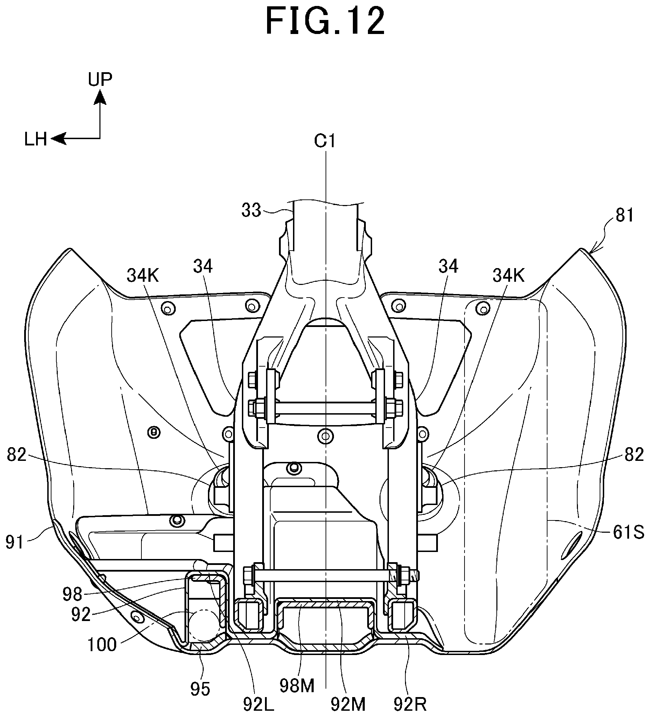

FIG. 12 is a view showing an example of a cross section in the vehicle width direction when the left projecting portion 92L and the central projecting portion 92M are configured as storage portions.

As shown in FIG. 12, a cushioning member 98 is disposed on the inner surface part of the left projecting portion 92L of the sub-plate 92, and a cushioning member 98M is disposed on the inner surface part of the central projecting portion 92M of the sub-plate 92. These cushioning members 98 and 98M can better protect articles 100 in the respective projecting portions 92L and 92M and the respective projecting portions 92L and 92M.

Further, the present invention is described with the case in which the present invention is applied to the motorcycle shown in FIG. 1 and so on, but the present invention is not limited to this. The present invention may also be applied to other motorcycles and saddle-ride vehicles including three-wheeled and four-wheeled vehicles. Further, the vehicle body frame 11 does not need to be limited to the frame structure described above.

### [Configuration Supported by Above Embodiments]

The above embodiments support the following configurations.

### (Configuration 1)

1. A saddle-ride vehicle including: a vehicle body frame; and a skid plate covering at least a part of a power unit, wherein the vehicle body frame includes a down frame extending downward from a head pipe toward a front side of the power unit and includes a lower frame located on a lower side of the power unit, and the skid plate extends from a lower part of the down frame to a front part of the lower frame, includes an upper plate and a lower plate, and includes a storage portion between the upper plate and the lower plate.

This configuration makes it possible to store a heavy article in a lower part of the vehicle body and to improve the storage efficiency without impairing running performance.

### (Configuration 2)

The saddle-ride vehicle according to configuration 1, wherein the storage portion has an opening-closing portion, on a vehicle body lateral side, for putting in and taking out an article.

This configuration makes it possible to put in and take out an article without removing the skid plate from the saddle-ride vehicle, and usability improves.

### (Configuration 3)

The saddle-ride vehicle according to configuration 1 or 2, wherein the storage portion is located outside the lower frame in a vehicle width direction.

This configuration makes it possible to protect the lower frame from flying debris from lateral sides of the vehicle body.

### (Configuration 4)

The saddle-ride vehicle according to any one of configurations 1 to 3, wherein the lower plate is provided with a cushioning member for relieving impact force acting between the lower plate and an article in the storage portion.

This configuration makes it possible to protect an article and the lower plate portion inside the storage portion with the cushioning member.

### (Configuration 5)

The saddle-ride vehicle according to any one of configurations 1 to 4, wherein a mounted portion to be mounted on the vehicle body frame with a predetermined mounting member is provided at a front part of the skid plate, and an attachment and detachment portion to be hooked to a part of the saddle-ride vehicle is provided at a rear part of the skid plate.

This configuration makes it possible to easily attach and detach the skid plate and facilitates maintenance around the power unit.

### (Configuration 6)

The saddle-ride vehicle according to any one of configurations 1 to 5, further including another storage portion in a region different from the storage portion between the upper plate and the lower plate, wherein the upper plate is provided with an opening for putting and taking an article into and out of the other storage portion.

This configuration makes it possible to easily put and take an article into and out of the other storage portion.

### (Configuration 7)

The saddle-ride vehicle according to configuration 6, wherein the other storage portion is located between a pair of left and right lower frames, each lower frame being the lower frame.

This configuration makes it possible to protect an article stored in the other storage portion and the other storage portion, using the pair of left and right lower frames.

### (Configuration 8)

The saddle-ride vehicle according to configuration 6 or 7, wherein
the lower plate is provided with a cushioning member for relieving impact force acting between the lower plate and an article in the other storage portion.

This configuration makes it possible to protect an article in the other storage portion and the lower plate portion in the other storage portion, using the other cushioning member.

### (Configuration 9)

The saddle-ride vehicle according to any one of configurations 6 to 8, wherein the upper plate is provided with cushioning members for relieving impact force acting between the upper plate and an article in the storage portion and between the upper plate and an article in the other storage portion.

This configuration makes it possible to better protect an article in the other storage portion and the other storage portion, using the cushioning member.

### Reference Signs List

10 saddle-ride vehicle
11 vehicle body frame
12 power unit
18 head pipe
23 crankcase
24 cylinder portion
31 main frame
32 pivot frame
33 down frame
34 lower frame
34K fixing portion
81 skid plate
82 mounted portion
83 mounting member
85 attachment and detachment portion
91 main plate (lower plate)
92 sub-plate (upper plate)
92L left projecting portion (storage portion)
92K opening
92M central projecting portion (other storage portion)
92MK opening (other opening)
92R right projecting portion
95, 95M, 98, 98M cushioning member
96, 96M lid member
100 article

## Claims

1. A saddle-ride vehicle comprising:
a vehicle body frame (11); and
a skid plate (81) covering at least a part of a power unit (12), **characterized in that**
the vehicle body frame (11) includes a down frame (33) extending downward from a head pipe (18) toward a front side of the power unit (12) and includes a lower frame (34) located on a lower side of the power unit (12), and
the skid plate (81) extends from a lower part of the down frame (33) to a front part of the lower frame (34), includes an upper plate (92) and a lower plate (91), and includes a storage portion (92L) between the upper plate (92) and the lower plate (91).

2. The saddle-ride vehicle according to claim 1, wherein
the storage portion (92L) has an opening-closing portion (92K, 96), on a vehicle body lateral side, for putting in and taking out an article.

3. The saddle-ride vehicle according to claim 1 or 2, wherein
the storage portion (92L) is located outside the lower frame (34) in a vehicle width direction.

4. The saddle-ride vehicle according to any one of claims 1 to 3, wherein
the lower plate (91) is provided with a cushioning member (95) for relieving impact force acting between the lower plate (91) and an article in the storage portion (92L) .

5. The saddle-ride vehicle according to any one of claims 1 to 4, wherein
a mounted portion (82) to be mounted on the vehicle body frame (11) with a predetermined mounting member (83) is provided at a front part of the skid plate (81), and an attachment and detachment portion (85) to be hooked to a part of the saddle-ride vehicle is provided at a rear part of the skid plate (81).

6. The saddle-ride vehicle according to any one of claims 1 to 5, further comprising another storage portion (92M) in a region different from the storage portion (92L) between the upper plate (92) and the lower plate (91),
wherein the upper plate (92) is provided with an opening (92MK) for putting and taking an article into and out of the other storage portion (92M).

7. The saddle-ride vehicle according to claim 6, wherein
the other storage portion (92M) is located between a pair of left and right lower frames (34), each lower frame (34) being the lower frame (34).

8. The saddle-ride vehicle according to claim 6 or 7, wherein
the lower plate (91) is provided with a cushioning member (95M) for relieving impact force acting between the lower plate (91) and an article in the other storage portion (92M).

9. The saddle-ride vehicle according to any one of claims 6 to 8, wherein
the upper plate (91) is provided with cushioning members (98, 98M) for relieving impact force acting between the upper plate (91) and an article in the storage portion (92L) and between the upper plate (91) and an article in the other storage portion (92M).
